# EUROPEAN PATENT APPLICATION

(11) **EP 2 175 543 A1**
(43) Date of publication of application: **14.04.2010**
(21) Application number: 08763992.8
(22) Date of filing: 03.06.2008
(51) Int. Cl.: H02J 7/00, H01M 10/44, H02H 7/18, H02J 7/35

(54) **INDEPENDENT POWER SUPPLY SYSTEM**

(30) Priority: 27.07.2007 JP 2007196344
(71) Applicant: Panasonic Corporation, Kadoma-shi Osaka 571-0051 (JP)
(72) Inventor: MAEGAWA, Kazuya, Osaka 540-6207 (JP)
(74) Representative: Schwabe - Sandmair - Marx
(86) International application number: PCT/JP2008/001395
(87) International publication number: WO 2009/016789

(57) **Abstract**

An independent power system has a power source control unit (51) for controlling discharge of a storage battery (4) to a connection terminal (9), a first electricity supply unit (6) for supplying electricity generated by a solar battery (2) to the power source control unit (51) as an operation power, a second electricity supply unit (7) for supplying electricity stored in the storage battery (4) to the power source control unit (51) as the operation power, and a switching element (72) for inhibiting the second electricity supply unit (7) from supplying the operation power to the power source control unit (51) when the terminal voltage of the storage battery (4) is less than an operational voltage threshold. During a period in which the switching element (72) is off and stops operating, when the electricity generated by the solar battery (2) is supplied by the first electricity supply unit (6), the power source control unit (51) is activated to turn on the switching element (72).

## Description

### Technical Field

The present invention relates to an independent power system that charges a storage battery with electricity generated using natural energy such as solar power or wind power, and then supplies the electricity to various external loads such as a camera and a sensor.

### Background Art

A conventional independent power system that charges a battery using natural energy such as sunlight and wind power is capable of supplying electricity independently without receiving supply of electricity from a power company. Therefore, such an independent power system can be used as a power unit that can be easily installed outside, because no electrical work needs to be performed on electric wires managed by the power company. Because this independent power system generates electricity based on natural energy depending on a solar battery or a windmill, the amount of electricity generated varies due to changes in various natural environments, such as weather, season, or climate of the region where the independent power system is installed.

For this reason, excess or deficiency of the amount of electricity generated is compensated by charging/discharging the storage battery by storing the generated electricity in the storage battery. Examples of such storage battery include a lead storage battery, nickel-hydrogen secondary battery, lithium-ion secondary battery, and various other secondary batteries. Such a storage battery enters a so-called overcharged state when it is caused to discharge until the terminal voltage becomes equal to or lower than a discharge inhibition voltage, reducing the life of the storage battery.

On the other hand, in the independent power system described above, the amount of electricity generated fluctuates with changes in the natural environments, and thus the amount of electricity generated might become insufficient for a long period of time. Because the storage battery is not charged but continuously discharged when the amount of electricity generated becomes insufficient for a long period of time, the storage battery enters an overdischarged state and becomes deteriorated. Therefore, there is known a technology for preventing the occurrence of an overdischarged state by having a control circuit that monitors the voltage of a storage battery and the ambient temperature and inhibits discharge of the storage battery when the states of the monitored elements fall under a predetermined condition (see Patent Document 1, for example).

However, because the independent power system mentioned above cannot receive the power supply from the outside, the abovementioned control circuit for preventing overdischarge is inevitably operated in response to the supply of electricity from the storage battery of the independent power system to operate the storage battery. For this reason, when the discharge of the storage battery is inhibited to prevent the overdischarge of the storage battery, supply of the operational electricity for the control circuit is discontinued, whereby the operation of the control circuit is stopped. When the operation of the control circuit is stopped, the voltage of the storage battery and the amount of electricity generated thereof cannot be monitored. Consequently, even when the amount of electricity generated is increased again due to changes in the natural environments, such increase of the electricity generated cannot be detected by the control circuit. As a result, the discharge of the storage battery remains inhibited, and the electricity cannot be supplied to the loads.
Patent Document 1: Japanese Patent Application Laid-open No. 2006-25480

### Disclosure of the Invention

The present invention was contrived in view of such circumstances, and an object thereof is to provide an independent power system that is capable of reactivating a power control unit in response to an increase in the amount of electricity generated based on natural energy, the power control unit being in a stopped state in which the supply of operational electricity is discontinued due to inhibition of discharge of a storage battery.

The independent power system according to one aspect of the present invention has: an electricity generating unit for generating electricity based on natural energy; a storage battery for storing the electricity generated by the electricity generating unit; a connection terminal to which a load is connected; a power control unit for controlling discharge of the storage battery to the connection terminal; a first operational electricity supply unit for supplying the electricity generated by the electricity generating unit, as operational electricity for the power control unit; a second operational electricity supply unit for supplying the electricity stored in the storage battery, as operational electricity for the power control unit; a voltage detection unit for detecting terminal voltage of the storage battery; and a stored-electricity supply inhibiting unit for inhibiting supply of the operational electricity from the second operational electricity supply unit to the power control unit when the terminal voltage detected by the voltage detection unit is less than a predetermined operational voltage threshold, wherein, during a period in which the operation is stopped by the stored-electricity supply inhibiting unit inhibiting the supply of the operational electricity from the second operational electricity supply unit, the power control unit is activated when the electricity generated by the electricity generating unit is supplied by the first operational electricity supply unit, and cancels the inhibition of the supply of the operational electricity inhibited by the operational electricity supply inhibiting unit.

According to this configuration, the electricity that is generated by the electricity generating unit based on natural energy is stored by the storage battery. The power control unit controls discharge of the storage battery to the connection terminal connected to the load. Then, the first operational electricity supply unit supplies the electricity generated by the electricity generating unit, as the operational electricity for the power control unit, and the second operational electricity supply unit supplies the electricity stored in the storage battery, as operational electricity for the power control unit. Furthermore, when the terminal voltage of the storage battery that is detected by the voltage detection unit is less than the predetermined operational voltage threshold, the stored-electricity supply inhibiting unit inhibits the supply of the operational electricity from the second operational electricity supply unit to the power control unit. As a result, the supply of the operational electricity to the power control unit is discontinued, and the power control unit enters a stopped state. Because the operational electricity is no longer supplied from the storage battery to the power control unit, the possibility that the storage battery enters an overdischarged state is reduced. Moreover, during a period in which the operation of the power control unit is stopped by the stored-electricity supply inhibiting unit inhibiting the supply of the operational electricity from the second operational electricity supply unit, the power control unit is activated when the electricity generated by the electricity generating unit is supplied by the first operational electricity supply unit, and cancels the inhibition of the supply of the operational electricity inhibited by the operational electricity supply inhibiting unit. As a result, the power control unit that is in the stopped state and is no longer supplied with the operational electricity due to the inhibition of discharge of the storage battery can be reactivated in response to an increase in the amount of electricity generated based on the natural energy.

### Brief Description of the Drawings

[Fig. 1] Fig. 1 is a block diagram showing an example of the configuration of an independent power system according to a first embodiment of the present invention.
[Fig. 2] Fig. 2 is a block diagram showing an example of the configurations of a control unit, first electricity supply unit and second electricity supply unit that are shown in Fig. 1.
[Fig. 3] Fig. 3 is a flowchart showing an example of operations of a power control unit shown in Fig. 2.
[Fig. 4] Fig. 4 is a flowchart showing an example of the operations of the power control unit shown in Fig. 2.
[Fig. 5] Fig. 5 is a block diagram for explaining an example of the configurations of a control unit, first electricity supply unit, second electricity supply unit, and natural electricity supply inhibiting unit of an independent power system according to a second embodiment of the present invention.

### Best Mode for Carrying Out the Invention

Embodiments according to the present invention are now described hereinafter with reference to the drawings. Note that the same reference numerals are used to indicate the same configurations, and therefore the overlapping explanations are omitted accordingly.

### (First Embodiment)

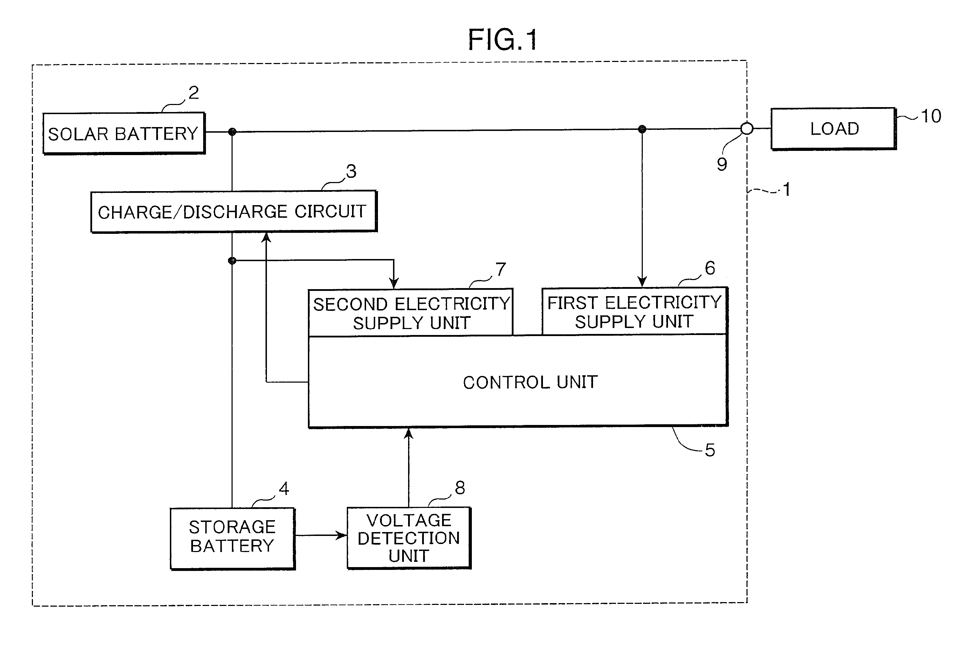

Fig. 1 is a block diagram showing an example of the configuration of an independent power system according to a first embodiment of the present invention. The independent power system 1 shown in Fig. 1 has a solar battery 2 (electricity generating unit), charge/discharge circuit 3, storage battery 4, control unit 5, first electricity supply unit 6 (first operational electricity supply unit), second electricity supply unit 7 (second operational electricity supply unit), voltage detection unit 8, and connection terminal 9. A load 10 is connected to the connection terminal 9. The independent power system 1 may include the load 10 or may be configured as an independent apparatus having the load 10.

The solar battery 2 is an electricity generating unit for generating electricity based on sunlight, which is an example of natural energy. The solar battery 2 supplies the generated electricity to the charge/discharge circuit 3, the first electricity supply unit 6, and the load 10 connected to the connection terminal 9. Note that the electricity generating unit can use not only a solar battery but also an electricity generator that generates electricity by means of, for example, wind power, hydraulic power, geothermal power, tidal, ocean thermal energy conversion, solar power, and various other natural energies.

As the storage battery 4, for example, lead storage battery, nickel-hydrogen secondary battery, lithium-ion secondary battery, and various other secondary batteries can be used.

The charge/discharge circuit 3 is a circuit for charging/discharging the storage battery 4 in response to a control signal from the control unit 5. The charge/discharge circuit 3 is configured by a charge circuit, such as a DC-DC converter, which converts, for example, output voltage of the solar battery 2 to voltage appropriate for charging the storage battery 4 and adjusts charging current, and a switching element for opening/closing a charging path extending from the solar battery 2 to the storage battery 4 and a discharging path extending from the storage battery 4 to the connection terminal 9. Note that the charge/discharge circuit 3 may not have the charging circuit described above, and may be configured such that the output voltage of the solar battery 2 is applied directly to the storage battery 4 to charge the storage battery 4.

The voltage detection unit 8 is configured by using, for example, an AD converter. The voltage detection unit 8 detects terminal voltage of the storage battery 4 and outputs a voltage value of the terminal voltage to the control unit 5.

The connection terminal 9 is a connection terminal for supplying output electricity of the solar battery 2 or the storage battery 4 to the load 10. The connection terminal 9 may be connected to the load 10. The connection terminal 9 may also be, for example, a terminal board, a connector, or a wiring pattern of lands or pads.

The load 10 is a load circuit driven by the electricity generated by the solar battery 2. The load 10 can preferably use, for example, a WEB camera for fixed-point observation, temperature sensor, humidity sensor, street light, street sign, and the like.

The control unit 5 outputs a control signal to the charge/discharge circuit 3 to control the operation of the charge/discharge circuit 3, thereby controlling charge/discharge of the storage battery 4. The first electricity supply unit 6 supplies the electricity generated by the storage battery 4, as operational electricity for the control unit 5. The second electricity supply unit 7 supplies the electricity stored in the storage battery 4, as the operational electricity for the control unit 5.

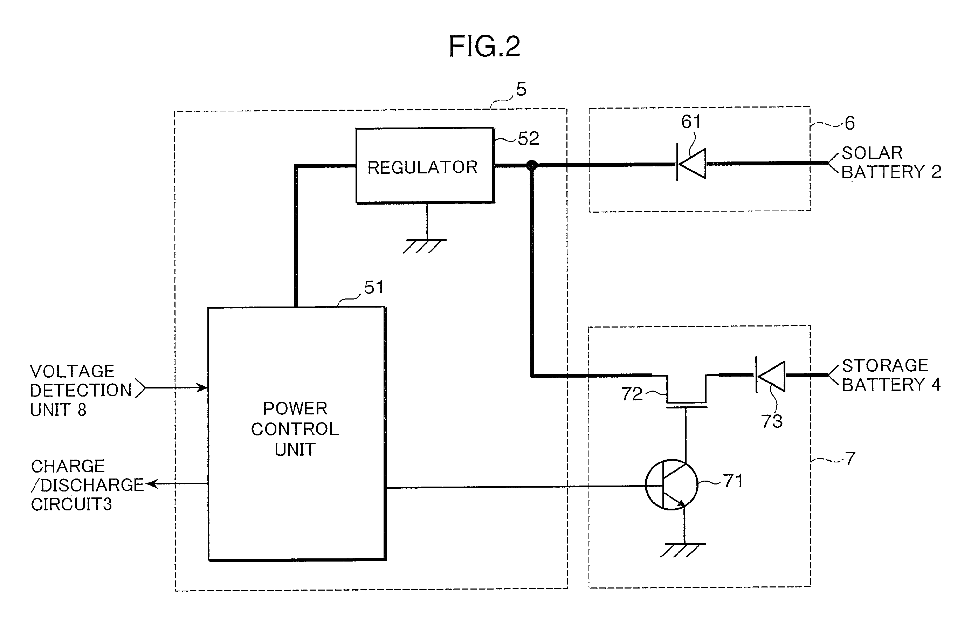

Fig. 2 is a block diagram showing an example of the configurations of the control unit 5, first electricity supply unit 6, and second electricity supply unit 7 shown in Fig. 1 The control unit 5 shown in Fig. 2 has a power control unit 51 and a regulator 52 (operational power unit). The first electricity supply unit 6 shown in Fig. 2 is configured by a diode 61. The output voltage of the solar battery 2 is applied to the regulator 52 via the diode 61. The diode 61 prevents the current output from the storage battery 4 from flowing back to the solar battery 2 or the load 10 via the first electricity supply unit 6.

The second electricity supply unit 7 shown in Fig. 2 is configured by a switching element 71, switching element 72 (stored-electricity supply inhibiting unit), and diode 73. The switching element 71 is, for example, a bipolar transistor. The switching element 72 is, for example, an FET (Field Effect Transistor). The output voltage of the storage battery 4 is applied to the regulator 52 via the diode 73 and the switching element 72.

The gate of the switching element 72 is connected to the ground via the switching element 71, while the base of the switching element 71 is connected to the power control unit 51.
Thus, for example, when the switching element 71 is turned on in response to a control signal from the power control unit 51, the level of the gate of the switching element 72 becomes low, and the switching element 72 is turned on. The diode 73 prevents current output from the solar battery 2 from flowing back to the storage battery 4 via the diode 61 and the switching element 72.

The regulator 52 generates operational power-supply voltage suitable for the power control unit 51 based on the electricity supplied from the first electricity supply unit 6 and the second electricity supply unit 7, and then supplies the operational power-supply voltage to the power control unit 51.

The power control unit 51 is configured by, for example, a CPU (Central Processing Unit) for executing a predetermined computation process, a nonvolatile ROM (Read Only Memory) having a predetermined control program stored therein, a RAM (Random Access Memory) for temporarily storing data, and a peripheral circuit.

The power control unit 51 executes the control program stored in the ROM to monitor the terminal voltage of the storage battery 4 detected by the voltage detection unit 8, the temperature of the storage battery 4 detected by, for example, the unshown temperature sensor, and the temperature of the external environment, and inhibits charging of the storage battery 4 by means of the charge/discharge circuit 3 when the storage battery 4 is about to be overcharged, or inhibits discharging of the storage battery 4 by means of the charge/discharge circuit 3 when the storage battery 4 is about to be overdischarged, thereby preventing the storage battery 4 from being overcharged or overdischarged.

When the terminal voltage Vb of the storage battery 4 detected by the voltage detection unit 8 is less than a previously set operational voltage threshold Vth, the power control unit 51 turns the switching element 71 off and thereby turns the switching element 72 off. In this manner, in the case where the amount of electricity generated by the solar battery 2 during nighttime is zero, when the storage battery 4 is progressively discharged and the terminal voltage Vb thereof drops below the operational voltage threshold Vth, the power control unit 51 turns the switching element 72 off, and the supply of the operational electricity for the power control unit 51 from the regulator 52 is discontinued, whereby the power control unit 51 is stopped. As a result, the storage battery 4 is inhibited from discharging the operational electricity for the power control unit 51, and the possibility that the power control unit 51 enters an overdischarged state is reduced.

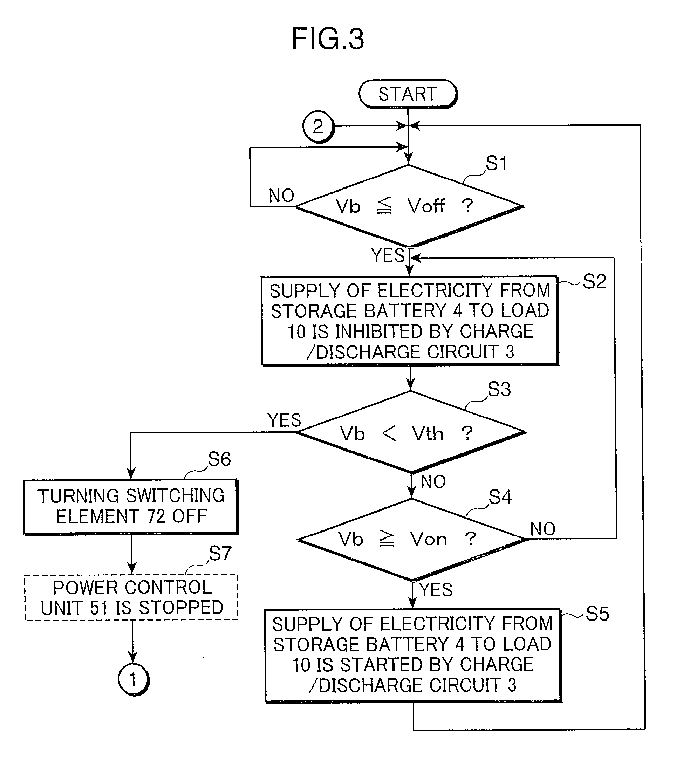

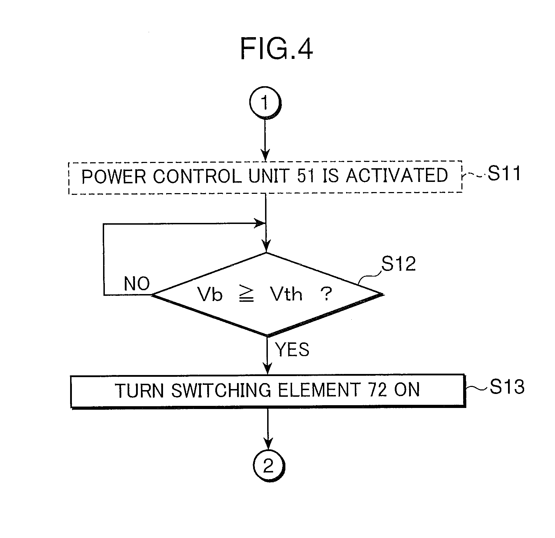

Figs. 3 and 4 are flowchart showing examples of the operations of the power control unit 51 shown in Fig. 2. First, the power control unit 51 compares the terminal voltage Vb of the storage battery 4 detected by the voltage detection unit 8 with load interrupting voltage Voff that is previously set as voltage for stopping discharge of the storage battery 4 in order to prevent the storage battery 4 from being overdischarged (step S1).

When the terminal voltage Vb becomes equal to or lower than the load interrupting voltage Voff (YES in step S1), the power control unit 51 outputs a control signal to instruct the charge/discharge circuit 3 to inhibit discharge to the connection terminal 9 (and the load 10 connected to the connection terminal 9), and thereby inhibits the supply of electricity from the storage battery 4 to the connection terminal 9 (and the load 10 connected to the connection terminal 9) (step S2). Consequently, for example, the charge/discharge circuit 3 interrupts the discharging path extending from the storage battery 4 to the connection terminal 9 to inhibit discharge of the storage battery 4 to the load 10 so that the possibility that the storage battery 4 enters the overdischarged state can be reduced.

Next, the power control unit 51 compares the terminal voltage Vb of the storage battery 4 detected by the voltage detection unit 8 with operational voltage threshold Vth that is previously set at voltage lower than the load interrupting voltage Voff (step S3). Then, when the terminal voltage Vb is equal to or higher than the operational voltage threshold Vth (NO in step S3), the power control unit 51 compares the terminal voltage Vb of the storage battery 4 detected by the voltage detection unit 8 with discharge-permitting voltage Von that is previously set at voltage higher than the load interrupting voltage Voff (Step S4). For example, lower-limit voltage within a voltage range that is suitable for use in the storage battery 4 is set as the discharge-permitting voltage Von.

When the terminal voltage Vb is less than the discharge-permitting voltage Von (NO in step S4), discharge of the storage battery 4 to the load 10 is inhibited in step S2 because the storage battery 4 remains in a state where the state of charge is low, which is not suitable for use.
On the other hand, for example, when the electricity that is generated by the solar battery 2 by emitting sunlight to the solar battery 2 is charged into the storage battery 4 by the charge/discharge circuit 3, and consequently the terminal voltage Vb increased to become equal to or higher than the discharge-permitting voltage Von (YES in step S4), it is considered that the storage battery 4 does not enter the overdischarged state immediately, even when discharging the storage battery 4.

When the terminal voltage Vb becomes equal to or higher than the discharge-permitting voltage Von (YES in step S4), the power control unit 51 outputs, to the charge/discharge circuit 3, a control signal indicating that discharge from the storage battery 4 to the connection terminal 9 (and the load 10 connected to the connection terminal 9) is permitted. Accordingly, supply of electricity from the storage battery 4 to the load 10 is started, for example, by causing the charge/discharge circuit 3 to turn on the switching element that interrupts the discharging path extending from the storage battery 4 to the connection terminal 9 (step S5), and the processes between steps S1 to S5 are repeated.

Incidentally, when, for example, the amount of electricity generated by the solar battery 2 during nighttime is substantially zero or the amount of electricity is less than the amount of electricity required for operating the power control unit 51, the power control unit 51 is operated by the electricity supplied by the storage battery 4, second electricity supply unit 7, and regulator 52. Therefore, even when the charge/discharge circuit 3 inhibits discharge of the storage battery 4 to the load 10, the storage battery 4 is caused to discharge in order to supply the operational electricity of the power control unit 51. Then, the terminal voltage Vb of the storage battery 4 gradually decreases as the storage battery 4 discharges.

In step S3, when the storage battery 4 progressively discharges and consequently the terminal voltage Vb thereof drops below the operational voltage threshold Vth (YES in step S3), the power control unit 51 turns the switching element 72 off (step S6). Consequently, supply of the operational electricity of the power control unit 51 from the regulator 52 is discontinued, whereby the power control unit 51 is stopped (step S7). As a result, the storage battery 4 is inhibited from discharging the operational electricity for the power control unit 51, and the possibility that the power control unit 51 enters the overdischarged state is reduced.

For example, when the electricity is generated by the solar battery 2 by emitting sunlight to the solar battery 2 while the power control unit 51 is stopped (step S7), the electricity generated by the solar battery 2 is supplied to the regulator 52 via the diode 61, since the independent power system 1 is provided with the first electricity supply unit 6. Then, when the amount of electricity supplied from the solar battery 2 reaches the amount of electricity with which the power control unit 51 can be operated, the regulator 52 increases or reduces the output voltage of the solar battery 2 to voltage suitable for operating the power control unit 51, whereby operational power-supply voltage Vop is generated. The generated operational power-supply voltage Vop is supplied to the power control unit 51.

Once the operational power-supply voltage Vop is supplied, the reset of the power control unit 51 is released by, for example, an unshown reset circuit, and the power control unit 51 is activated (step S11). In this manner, by providing the independent power system 1 with the first electricity supply unit 6, the power control unit 51, which is in the stopped state and is no longer supplied with the operational electricity due to inhibition of discharge of the storage battery 4, can be reactivated automatically in response to an increase the amount of electricity generated based on the natural energy.

Once the power control unit 51 is activated, the power control unit 51 compares the terminal voltage Vb of the storage battery 4 detected by the voltage detection unit 8 with the operational voltage threshold Vth (step S12). Then, when the terminal voltage Vb is equal to or higher than the operational voltage threshold Vth (YES in step S12), the power control unit 51 turns the switching element 71 on and thereby turns the switching element 72 on (step S 13). When the switching element 72 is turned on, output electricity of the storage battery 4 can be supplied to the regulator 52. Consequently, the power control unit 51 can be operated based on the output electricity of the storage battery 4. The processes between steps S1 to S13 are repeated hereinafter.

Therefore, even when the amount of electricity generated by the solar battery 2 drops in response to changes in the natural environments where, for example, sunlight is blocked by a cloud, the power control unit 51 can be operated stably based on the output electricity of the storage battery 4.

Because the power control unit 51 can be automatically reactivated in response to an increase in the amount of electricity generated based on the natural energy when the power control unit 51 is in the stopped state and is no longer supplied with the operational electricity due to inhibition of discharge of the storage battery 4, the storage battery 4 can be protected from entering an overcharged or overdischarged state, and the independent power system 1 can be continuously used.

If the switching element 72 is always turned on after reactivating the power control unit 51 without executing step S12, when the terminal voltage Vb is less than the operational voltage threshold Vth, the switching element 72 is turned on immediately in step S 13 after the process is transferred from step S3 to step S6 again and the switching element 72 is turned off. In this manner, the switching element 72 is turned on and off repeatedly. As a result, the voltage that is input to the regulator 52 fluctuates as the switching element 72 is turned on or off, and noise is added to the operational power-supply voltage Vop supplied from the regulator 52 to the power control unit 51, destabilizing the operation of the power control unit 51.

In the independent power system 1 shown in Fig. 1, however, because the switching element 71 is not turned on until the terminal voltage Vb becomes equal to or higher than the operational voltage threshold Vth in the process of step S12, the switching element 71 can be prevented from being turned on and off unnecessarily, and the possibility of destabilizing the operation of the power control unit 51 can be reduced.

In the present embodiment, although electricity is stored using the solar battery, the same effects can be achieved by wind-power generation, geothermal generation, or other natural energy for storing electricity. Moreover, the same effects can be achieved by using a nickel-hydrogen battery, lithium-ion battery or various other batteries as the storage battery, regardless of the type of the battery. The same effects can also be achieved by using a camera, temperature sensor, or humidity sensor as the load, regardless of the type of the load.

### (Second Embodiment)

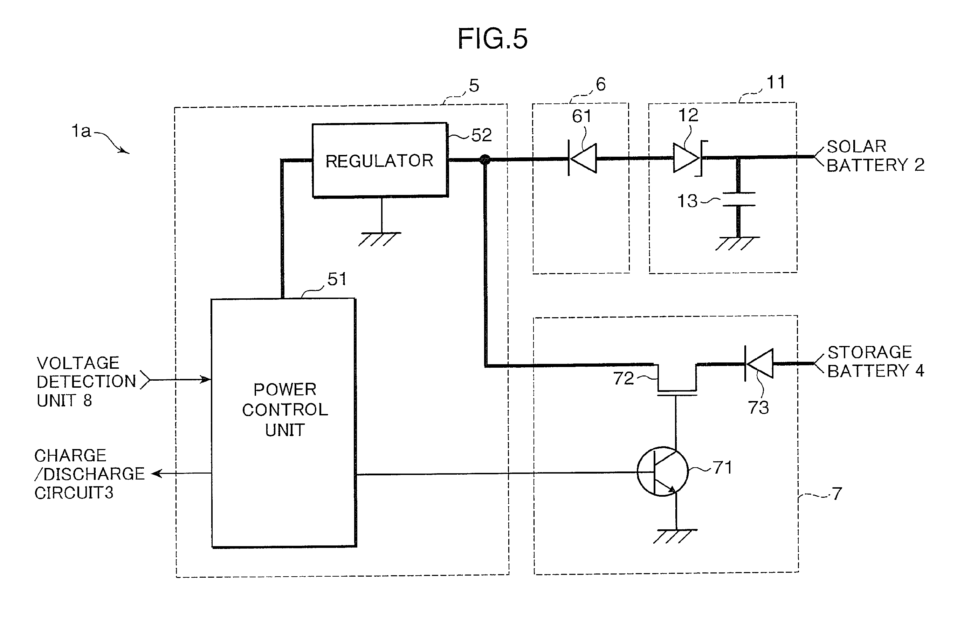

An independent power system according to a second embodiment of the present invention is described next. Fig. 5 is a block diagram for explaining an example of the configurations of a control unit 5, first electricity supply unit 6, second electricity supply unit 7, and natural electricity supply inhibiting unit 11 of an independent power system 1a according to the second embodiment of the present invention. The independent power system 1a of the second embodiment of the present invention is different than the independent power system 1 in being provided with the natural electricity supply inhibiting unit 11.

As shown in Fig. 5, the natural electricity supply inhibiting unit 11 of the independent power system 1a is interposed between a solar battery 2 and the first electricity supply unit 6. The natural electricity supply inhibiting unit 11 shown in Fig. 5 has a zener diode 12 and a capacitor 13 (storage element). In place of the capacitor 13, a secondary battery may be provided as the storage element. The cathode of the zener diode 12 is connected to the solar battery 2 and the anode thereof is connected to the anode of a diode 61. The cathode of the zener diode 12 is also connected to the ground via the capacitor 13.

Generally, in order for the regulator 52 to generate the operational power-supply voltage Vop, it is necessary to input voltage that is equal to or higher than specified voltage that is defined based on the specification of the regulator 52. When the input voltage is less than the specified voltage of the regulator 52, the specified operational power-supply voltage Vop cannot be generated even when the regulator is a step-up switching regulator. As a result, low voltage that is lower than the operational power-supply voltage Vop might be supplied to the power control unit 51.

When the low voltage that is lower than the operational power-supply voltage Vop is supplied as the power-supply voltage to the power control unit 51, the CPU, ROM, RAM and the like configuring the power control unit 51 might not operate normally, causing malfunction of the power control unit 51.

On the other hand, in a solar battery, a wind power generator or an electricity generator that generates electricity using the natural energy, the amount of electricity generated fluctuates frequently in response to changes in the natural environments, and thus decrease of the amount of electricity generated to an extremely low level is inevitable. For this reason, in the independent power system 1 shown in Figs. 1 and 2, malfunction might occur in the power control unit 51 when the amount of electricity generated by the solar battery 2 drops in response to the changes in the natural environments.

A configuration that supplies the operational power-supply voltage from the first electricity supply unit 6 directly to the power control unit 51 without having the regulator 52 increases the possibility of malfunction of the power control unit 51 caused by the decrease in the amount of electricity generated by the solar battery 2.

Therefore, in the natural electricity supply inhibiting unit 11 shown in Fig. 5, set voltage, which is voltage capable of generating the operational power-supply voltage Vop by means of the regulator 52 (or voltage at which the power control unit 51 can be operated normally), is set as zener voltage of the zener diode 12. Therefore, when the output voltage of the solar battery 2 is less than the abovementioned set voltage, the zener diode 12 is turned off and the output voltage of the solar battery 2 is no longer supplied to the first electricity supply unit 6. As a result, supply of the operational electricity from the first electricity supply unit 6 to the regulator 52 is inhibited. Thus, even when the amount of electricity generated by the solar batter 2 drops in response to changes in the natural environments, the possibility of malfunction of the power control unit 51 is reduced.

In addition, in the electricity generator that uses the natural energy, the amount of electricity generated fluctuates frequently in response to changes in the natural environments. Especially when generating electricity using sunlight or wind power, the fluctuation of the amount of electricity generated is noticeable in bad weather. When the power control unit 51 is frequently activated and stopped repeatedly as the amount of electricity generated fluctuates temporarily as described above, stability of the operation might be damaged.

In the natural electricity supply inhibiting unit 11 shown in Fig. 5, however, the output voltage of the solar battery 2 is smoothed by the capacitor 13, and the voltage that absorbs the temporal voltage fluctuation is applied to the cathode of the zener diode 12, reducing the possibility that the zener diode 12 is turned on by the temporal voltage fluctuation. As a result, it becomes possible to reduce the possibility that the power control unit 51 is frequently activated and stopped repeatedly in accordance with the temporal fluctuation of the amount of electricity generated, and the stability of the operation can be prevented from being damaged.

Furthermore, in the natural electricity supply inhibiting unit 11 shown in Fig. 5, the cathode voltage of the zener diode 12 is equal to charging voltage of the capacitor 13. Therefore, the capacitor 13 is charged by the supply of electricity from the solar battery 2 is continued for at least a set time period that is set by the capacity of the capacitor 13, and the cathode voltage of the zener diode 12 becomes equal to or higher than the zener voltage. As a result, the zener diode 12 is turned on. When the zener diode 12 is turned on, the electricity generated by the solar battery 2 is supplied to the regulator 52 via the first electricity supply unit 6, that is, inhibition of the supply of the operational electricity to the regulator 52 is canceled.

Therefore, when the supply of electricity from the solar battery 2 is continued for at least the predetermined set time period, that is, when the natural environments are considered stable, the zener diode 12 is turned on and the electricity generated by the solar battery 2 is supplied to the regulator 52 via the first electricity supply unit 6. Furthermore, the operational power-supply voltage Vop is output from the regulator 52, and consequently the power control unit 51 is activated. As a result, the possibility that the power control unit 51 is frequently activated and stopped repeatedly is reduced, and the stability of the operation of the power control unit 51 is prevented from being damaged.

Specifically, the independent power system according to one aspect of the present invention has: an electricity generating unit for generating electricity based on natural energy; a storage battery for storing the electricity generated by the electricity generating unit; a connection terminal to which a load is connected; a power control unit for controlling discharge of the storage battery to the connection terminal; a first operational electricity supply unit for supplying the electricity generated by the electricity generating unit, as operational electricity for the power control unit; a second operational electricity supply unit for supplying the electricity stored in the storage battery, as operational electricity for the power control unit; a voltage detection unit for detecting terminal voltage of the storage battery; and a stored-electricity supply inhibiting unit for inhibiting supply of the operational electricity from the second operational electricity supply unit to the power control unit when the terminal voltage detected by the voltage detection unit is less than a previously set operational voltage threshold, wherein, during a period in which the operation of the power control unit is stopped by the stored-electricity supply inhibiting unit inhibiting the supply of the operational electricity from the second operational electricity supply unit, the power control unit is activated when the electricity generated by the electricity generating unit is supplied by the first operational electricity supply unit, and cancels the inhibition of the supply of the operational electricity inhibited by the operational electricity supply inhibiting unit.

According to this configuration, the electricity that is generated by the electricity generating unit based on natural energy is stored by the storage battery. The power control unit controls discharge of the storage battery to the connection terminal connected to the load. Then, the first operational electricity supply unit supplies the electricity generated by the electricity generating unit, as the operational electricity for the power control unit, and the second operational electricity supply unit supplies the electricity stored in the storage battery, as the operational electricity for the power control unit. Furthermore, when the terminal voltage of the storage battery that is detected by the voltage detection unit is less than the previously set operational voltage threshold, the stored-electricity supply inhibiting unit inhibits the supply of the operational electricity from the second operational electricity supply unit to the power control unit. As a result, the supply of the operational electricity to the power control unit is discontinued, and the power control unit enters a stopped state. Because the operational electricity is no longer supplied from the storage battery to the power control unit, the possibility that the storage battery enters an overdischarged state is reduced. Moreover, during a period in which the operation of the power control unit is stopped by the stored-electricity supply inhibiting unit inhibiting the supply of the operational electricity from the second operational electricity supply unit, the power control unit is activated when the electricity generated by the electricity generating unit is supplied by the first operational electricity supply unit, and cancels the inhibition of the supply of the operational electricity inhibited by the operational electricity supply inhibiting unit. As a result, the power control unit that is in the stopped state and is no longer supplied with the operational electricity due to the inhibition of discharge of the storage battery can be reactivated in response to an increase in the amount of electricity generated based on the natural energy.

Preferably, the independent power system further has a natural electricity supply inhibiting unit that inhibits the supply of the operational electricity from the first operational electricity supply unit to the power control unit when output voltage of the electricity generating unit is less than predetermined set voltage.

Because the amount of electricity generated based on the natural energy fluctuates with changes in the natural environments, the amount of electricity supplied from the electricity generating unit might become low. When such low level of electricity is supplied as the operational electricity from the first operational electricity supply unit to the power control unit, the operation of the power control unit might become unstable due to the insufficient operational electricity.

However, according to this configuration, when the amount of electricity generated by the electricity generating unit drops in response to the changes in the natural environments, and the output voltage of the electricity generating unit drops to the level less than the predetermined set voltage, the natural electricity supply inhibiting unit inhibits the supply of the operational electricity from the first operational electricity supply unit to the power control unit. As a result, the operation of the power control unit is stopped. Therefore, the possibility that the operation of the power control unit is destabilized by the insufficient supply of the operational electricity is reduced.

Preferably, in a state in which the supply of the operational electricity from the first operational electricity supply unit is inhibited, when the electricity generating unit continues to supply the electricity for at least a predetermined set time period, the natural electricity supply inhibiting unit allows the supply of the operational electricity from the first operational electricity supply unit.

The amount of electricity generated based on the natural energy fluctuates frequently in response to changes in the natural environments. Especially in solar power generation or wind-power generation, the amount of electricity generated fluctuates significantly in bad weather. When the power control unit is frequently activated and stopped repeatedly due to such temporal fluctuation of the amount of electricity generated, the stability of the operation of the power control unit might be damaged.

However, according to this configuration, during the state in which the first operational electricity supply unit is inhibited from supplying the operational electricity generated by the natural energy, when the electricity generating unit continues to generate the electricity for at least the predetermined set time period, that is, when the natural environments are considered somewhat stable, the natural electricity supply inhibiting units allows the first operational electricity supply unit to supply the operational electricity. Consequently, it becomes possible to reduce the possibility that the power control unit is frequently activated and started repeatedly due to the temporal fluctuation of the amount of electricity generated, which is caused by changes in the natural environments. Further, the possibility that the stability of the operation of the power control unit is damaged is reduced.

In addition, it is preferred that the natural electricity supply inhibiting unit have a storage element for smoothing the output voltage of the electricity generating unit, and allow the supply of the operational electricity from the first operational electricity supply unit on the premise that the electricity generating unit continues to supply the electricity for at least the set time period, when the voltage smoothened by the storage element exceeds the set voltage.

According to this configuration, the output voltage of the electricity generating unit that is likely to fluctuate frequently with changes in the natural environments is smoothened by the storage element, whereby temporal voltage fluctuation is absorbed. When the smoothened voltage exceeds the set voltage, it is considered that the electricity generating unit continues to supply the electricity for at least the set time period that is required for charging the storage element up to the set voltage. Therefore, the natural environments are considered somewhat stable. The natural electricity supply inhibiting unit having such configuration can easily absorb the temporal voltage fluctuation and at the same time allows the first operational electricity supply unit to supply the operational electricity when the natural environments are considered somewhat stable.

It is preferred that the natural electricity supply inhibiting unit have a zener diode, which is interposed in an electricity supply path between the electricity generating unit and the first operational electricity supply unit, a cathode of which is applied with terminal voltage of the storage element, and which takes the set voltage as zener voltage. When the terminal voltage of the storage element is less than the set voltage, the natural electricity supply inhibiting unit inhibits the supply of the operational electricity by turning off the zener diode. When the terminal voltage of the storage element exceeds the set voltage, the natural electricity supply inhibiting unit allows the supply of the operational electricity by turning on the zener diode.

According to this configuration, the output voltage of the electricity generating unit that is likely to fluctuate frequently with changes in the natural environments is smoothened by the storage element, and the smoothened output voltage is applied to the cathode of the zener diode. When the terminal voltage of the storage element, which is the voltage smoothened by the storage element, is less than the set voltage, the zener diode is turned off, and the supply of the operational electricity from the first operational electricity supply unit to the power control unit is inhibited. When, on the other hand, the terminal voltage of the storage element, which is the voltage smoothened by the storage element, exceeds the set voltage, the zener diode is turned on, and the supply of the operational electricity from the first operational electricity supply unit to the power control unit is allowed. Therefore, a simple configuration can be used to realize the natural electricity supply inhibiting unit that absorbs the temporal voltage fluctuation and at the same time allows the first operational electricity supply unit to supply the operational electricity when the natural environments are considered somewhat stable.

Moreover, it is preferred that the independent power system further have an operational power unit that generates operational power-supply voltage suitable for the power control unit based on the operational electricity supplied from the first operational electricity supply unit and the operational electricity supplied from the second operational electricity supply unit, and supplies the generated operational power-supply voltage to the power control unit. The set voltage is set at a voltage such that the operational power unit can generate the operational power-supply voltage when the set voltage is supplied as the operational electricity to the operational power unit.

Because the operational electricity generated based on the natural energy and supplied from the first operational electricity supply unit fluctuates with changes in the natural environments, the voltage becomes unstable. Moreover, the voltage value of discharge electricity of the storage battery that is supplied as the operational electricity from the second operational electricity supply unit fluctuates in response to the state of charge of the storage battery. Therefore, neither of the operational electricity supplied from the first and second operational electricity supply units becomes the voltage value suitable for operating the power control unit. Consequently, the operation of the power control unit might become unstable.

However, according to this configuration, the operational power unit generates the operational power-supply voltage suitable for the power control unit on the basis of the operational electricity supplied from the first operational electricity supply unit and the operational electricity supplied from the second operational electricity supply unit, and supplies the generated operational power-supply voltage to the power control unit. Therefore, the operational power-supply voltage suitable for the power control unit can be stably supplied to the power control unit, and the operation of the power control unit can be stabilized.

Moreover, in the case where the power control unit is activated during a period in which the supply of the operational electricity from the second operational electricity supply unit is inhibited and thereby the operation of the power control unit is stopped, when the terminal voltage detected by the voltage detection unit equal to or greater than the operational voltage threshold, the power control unit preferably cancels the inhibition of the supply of the operational electricity inhibited by the operational electricity supply inhibiting unit.

In the case where the power control unit is activated during a period in which the supply of the operational electricity from the second operational electricity supply unit is inhibited and thereby the operation of the power control unit is stopped, if the inhibition of the supply of the operational electricity inhibited by the operational electricity supply inhibiting unit is canceled unconditionally, the stored-electricity supply inhibiting unit might inhibits the supply of the operational electricity again, because the terminal voltage of the storage battery is less than the operational voltage threshold. In this case, the inhibition and cancelation of the inhibition of the electricity supply to the power control unit is repeated, and consequently the operation of the power control unit might become stable.

However, according to this configuration, in the case where the power control unit is activated during a period in which the supply of the operational electricity from the second operational electricity supply unit is inhibited and thereby the operation of the power control unit is stopped, if the terminal voltage of the storage battery is not equal to or greater than the operational voltage threshold, the inhibition of the supply of the operational electricity by the operational electricity supply inhibiting unit is not canceled. As a result, the inhibition and cancelation of the inhibition of the electricity supply to the power control unit is repeated, and the possibility that the operation of the power control unit becomes unstable can be reduced.

In addition, preferably, the power control unit inhibits the storage battery from discharging to the connection terminal when the terminal voltage detected by the voltage detection unit is equal to or lower than load interrupting voltage that is set to be higher than the operational voltage threshold, and allows the storage battery to discharge to the connection terminal when the terminal voltage detected by the voltage detection unit becomes equal to or greater than discharge-permitting voltage that is set to be higher than the load interrupting voltage, during a period in which discharge to the connection terminal is inhibited.

According to this configuration, the power control unit inhibits the storage battery from discharging to the connection terminal when the terminal voltage detected by the voltage detection unit is equal to or lower than the load interrupting voltage that is set to be higher than the operational voltage threshold. In this case, when the terminal voltage detected by the voltage detection unit is higher than the operational voltage threshold, that is, when there is no possibility that the supply of the operational electricity from the second operational electricity supply unit is inhibited and thereby the operation of the power control unit is stopped, the power control unit inhibits the storage battery from discharging to the connection terminal. Therefore, certainty of inhibiting discharge of the storage battery can be improved. Moreover, when the terminal voltage of the storage battery becomes equal to or higher than the discharge-permitting voltage that is set to be higher than the load interpreting voltage, during a period in which discharge to the connection terminal is inhibited, the power control unit allows the storage battery to discharge to the connection terminal. In this case, when the storage battery is charged and the terminal voltage thereof becomes equal to or higher than the discharge-permitting voltage, the electricity can be supplied to the load.

### Industrial Applicability

The independent power system using natural energy according to the present invention can be used suitably as an independent power system that supplies electricity generated by means of solar power, wind power, hydraulic power, geothermal power, tidal power, ocean thermal energy conversion, and various other natural energies, to a WEB camera for fixed-point observation, temperature sensor, humidity sensor, street light, street sign, and various other loads.

## Claims

1. An independent power system, comprising:
an electricity generating unit for generating electricity based on natural energy;
a storage battery for storing the electricity generated by the electricity generating unit;
a connection terminal to which a load is connected;
a power control unit for controlling discharge of the storage battery to the connection terminal;
a first operational electricity supply unit for supplying the electricity generated by the electricity generating unit, as operational electricity for the power control unit;
a second operational electricity supply unit for supplying the electricity stored in the storage battery, as operational electricity for the power control unit;
a voltage detection unit for detecting terminal voltage of the storage battery; and
a stored-electricity supply inhibiting unit for inhibiting supply of the operational electricity from the second operational electricity supply unit to the power control unit when the terminal voltage detected by the voltage detection unit is less than a predetermined operational voltage threshold,
wherein, during a period in which an operation is stopped by the stored-electricity supply inhibiting unit inhibiting the supply of the operational electricity from the second operational electricity supply unit, the power control unit is activated when the electricity generated by the electricity generating unit is supplied by the first operational electricity supply unit, and cancels the inhibition of the supply of the operational electricity inhibited by the operational electricity supply inhibiting unit.

2. The independent power system according to claim 1, further comprising a natural electricity supply inhibiting unit that inhibits the supply of the operational electricity from the first operational electricity supply unit to the power control unit when output voltage of the electricity generating unit is less than predetermined set voltage.

3. The independent power system according to claim 2, wherein, in a state in which the supply of the operational electricity from the first operational electricity supply unit is inhibited, when the electricity generating unit continues to supply the electricity for at least a predetermined set time period, the natural electricity supply inhibiting unit allows the supply of the operational electricity from the first operational electricity supply unit.

4. The independent power system according to claim 3, wherein the natural electricity supply inhibiting unit has a storage element for smoothing the output voltage of the electricity generating unit, and allows the supply of the operational electricity from the first operational electricity supply unit on the premise that the electricity generating unit continues to supply the electricity for at least the set time period, when the voltage smoothened by the storage element exceeds the set voltage.

5. The independent power system according to claim 4, wherein the natural electricity supply inhibiting unit has a zener diode, which is interposed in an electricity supply path between the electricity generating unit and the first operational electricity supply unit, a cathode of which is applied with terminal voltage of the storage element, and which takes the set voltage as zener voltage, and wherein
the natural electricity supply inhibiting unit inhibits the supply of the operational electricity by turning the zener diode off when the terminal voltage of the storage element is less than the set voltage, and allows the supply of the operational electricity by turning the zener diode on when the terminal voltage of the storage element exceeds the set voltage.

6. The independent power system according to any one of claims 2 to 5, further comprising:
an operational power unit that generates operational power-supply voltage suitable for the power control unit based on the operational electricity supplied from the first operational electricity supply unit and the operational electricity supplied from the second operational electricity supply unit, and supplies the generated operational power-supply voltage to the power control unit,
wherein the set voltage is set at a voltage such that the operational power unit can generate the operational power-supply voltage when the set voltage is supplied as the operational electricity to the operational power unit.

7. The independent power system according to any one of claims 1 to 6, wherein, in a case where the power control unit is activated during a period, in which the supply of the operational electricity from the second operational electricity supply unit is inhibited and thereby the operation is stopped, when the terminal voltage detected by the voltage detection unit equal to or greater than the operational voltage threshold, the power control unit cancels the inhibition of the supply of the operational electricity inhibited by the operational electricity supply inhibiting unit.

8. The independent power system according to any one of claims 1 to 7, wherein the power control unit inhibits the storage battery from discharging to the connection terminal when the terminal voltage detected by the voltage detection unit is equal to or lower than load interrupting voltage that is set to be higher than the operational voltage threshold, and allows the storage battery to discharge to the connection terminal when the terminal voltage detected by the voltage detection unit becomes equal to or greater than discharge-permitting voltage that is set to be higher than the load interrupting voltage, during a period in which discharge to the connection terminal is inhibited.
